# EUROPÄISCHE PATENTSCHRIFT

(11) **EP 0 976 607 B1**
(45) Veröffentlichungstag und Bekanntmachung des Hinweises auf die Patenterteilung: **05.04.2006**
(21) Anmeldenummer: 99114715.8
(22) Anmeldetag: 28.07.1999
(51) Int. Cl.: B60N 2/28

(54) **Vorrichtung zur Befestigung eines Kindersitzes auf einem Fahrzeugsitz**
Device for connecting a child seat onto a vehicle seat
Dispositif pour la fixation d'un siège d'enfant sur un siège de véhicule

(30) Priorität: 30.07.1998 DE 19834312
(43) Veröffentlichungstag der Anmeldung: 02.02.2000
(73) Patentinhaber: ADAM OPEL AG, 65423 Rüsselsheim (DE); LEAR Corporation GmbH & Co. KG, 65462 Ginsheim-Gustavsburg (DE)
(72) Erfinder: Baltes,Horst Dipl.-Ing.(FH), 65439 Flörsheim (DE); Eckhard, Klaus Dipl.-Phys., 65468 Trebur (DE); Exner, Eric Dipl.-Ing., 65462 Gustavsburg (DE)
(74) Vertreter: Daniel, Ulrich W.P.

(56) Entgegenhaltungen:
- EP-A- 0 703 113
- DE-A- 19 521 889
- DE-C- 19 650 087
- DE-U- 29 612 441

## Beschreibung

Die Erfindung betrifft eine Vorrichtung zur Befestigung eines Kindersitzes oder dergleichen auf einem Sitz, insbesondere einem Kraftfahrzeugsitz, welcher eine Rückenlehne sowie ein Sitzteil aufweist, die im Bereich der aneinander zugekehrten Enden einen Spalt bilden, in dem zumindest ein Befestigungspunkt für den Kindersitz bzw. ein mit diesem verbundenes Steckteil angeordnet ist.

Eine derartige Vorrichtung ist z. B. mit DE 195 21 889 A1 beschrieben. Diese Vorrichtung besteht im wesentlichen aus zwei miteinander korrespondierenden Steckteilen, von denen das eine Steckteil dem Kindersitz zugeordnet und das andere Steckteil im Spalt zwischen der Rückenlehne und dem Sitzteil gehalten ist. Das mit dem Kindersitz verbundene Steckteil ist in Form eines Bolzens mit einer vom Kindersitz wegweisenden, sich konisch verjüngenden Spitze ausgebildet, während das im Spalt angeordnete Steckteil zur verriegelbaren Aufnahme des Bolzens in Form einer Hülse ausgebildet ist. Zur Erleichterung der Befestigung des Kindersitzes ist dabei vorgesehen, daß die Hülse zwischen einer im vorderen Bereich des Spaltes befindlichen Stellung und einer im hinteren Bereich des Spaltes befindlichen Stellung axial verschiebbar angeordnet ist. Dadurch kann der Bolzen zunächst in die in der vorderen Stellung befindliche Hülse eingesteckt und danach zusammen mit der Hülse mittels einer Spannvorrichtung in die hintere Stellung bewegt werden.

Eine solche Vorrichtung ist jedoch herstellungs- und montageaufwendig. Einzelteile dieser Vorrichtung, wie beispielsweise Hülse und Spannvorrichtung, können bei Nichtbenutzung des Kindersitzes nicht vom Sitz entfernt werden. Außerdem können bei einer unachtsamen Montage des Kindersitzes die umliegenden Polsterteile durch den Bolzen beschädigt werden.

Der Erfindung liegt daher die Aufgabe zugrunde, eine Vorrichtung nach dem Oberbegriff des Patentanspruches 1 zu schaffen, welche einfach aufgebaut ist und die genannten Nachteile nicht mehr aufweist.

Diese Aufgabe wird erfindungsgemäß dadurch gelöst, daß zur Erweiterung des Spaltes bzw. zur Erleichterung des Zugangs zum Befestigungspunkt im Bereich des Spaltes ein abnehmbares Führungsteil für den Kindersitz bzw. das mit dem Kindersitz verbundene Steckteil vorgesehen ist. Vorteilhafte Weiterbildungen der Erfindung sind Gegenstand der Unteransprüche.

Wesentliche Vorteile eines solchen Führungsteils bestehen darin, daß dieses relativ einfach im Bereich des serienmäßig oder bei Bedarf nachträglich im Spalt angebrachten Befestigungspunktes montierbar ist. Dadurch ist die Befestigungsstelle nicht nur optisch gut erkennbar, sondern diese ist auch für das Steckteil gut zugänglich, da das Führungsteil einen trichterförmigen Zugangskanal für das Steckteil bildet. Bei Nichtbenutzung des Kindersitzes kann das Führungsteil relativ einfach entfernt werden, wodurch der Befestigungspunkt bzw. der Zugang zu diesem durch die elastischen Polsterteile von Rückenlehne und Sitzteil verdeckt wird.

Ein Ausführungsbeispiel der Erfindung ist nachstehend anhand von Zeichnungen näher beschrieben. Es zeigen

Fig. 1: eine räumliche Darstellung einer Sitzanlage eines Kraftfahrzeuges, welche an den äußeren Sitzen erfindungsgemäße Vorrichtungen zur Befestigung von Kindersitzen aufweist;

Fig. 2: eine Seitenansicht auf die im Bereich eines Spaltes zwischen der Rückenlehne und dem Sitzteil angeordnete Vorrichtung nach Fig. 1, mit einem noch nicht montierten Kindersitz;

Fig. 3: eine vergrößerte Darstellung einzelner Teile der Vorrichtung nach Fig. 1;

Fig. 4: eine alternative Ausbildung der Vorrichtung nach Fig. 3.

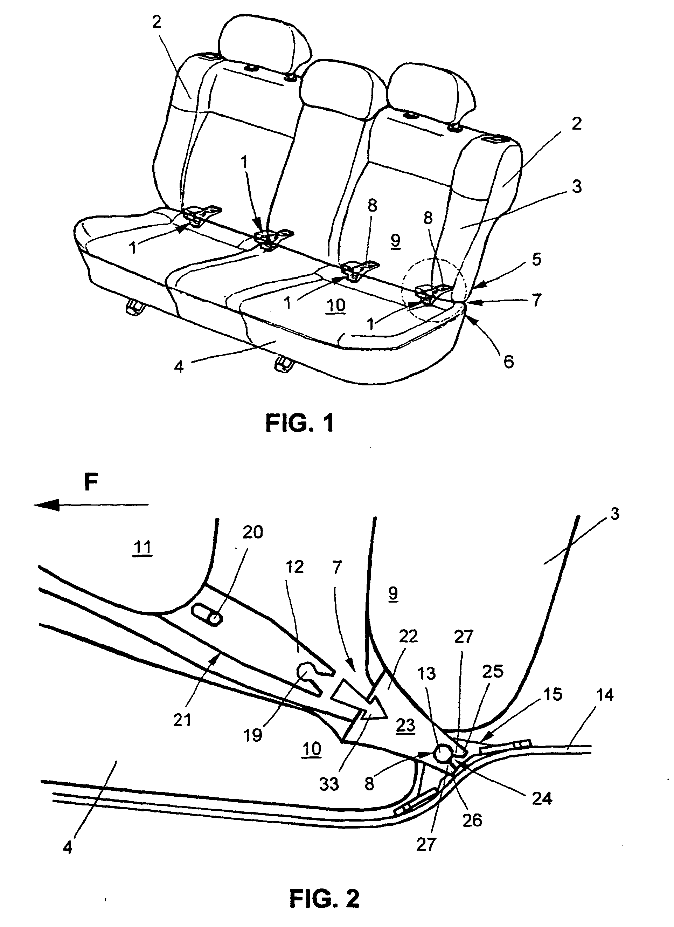

Fig. 1 zeigt eine mehrsitzige Sitzanlage eines Kraftfahrzeuges mit Vorrichtungen 1 zur Befestigung von Kindersitzen auf den äußeren Sitzen 2. Eine solche Vorrichtung 1 wird nachfolgend am Beispiel der Befestigung auf einem äußeren Sitz 2 näher beschrieben. Dieser Sitz 2 weist eine Rückenlehne 3 und ein Sitzteil 4 auf, die im Bereich der aneinander zugekehrten Enden 5, 6 einen Spalt 7 bilden, in dem zwei beabstandet zueinander angeordnete Befestigungspunkte 8 für den Kindersitz vorgesehen sind. Die Befestigungspunkte 8 sind dabei mit einem in Fig. 1 nicht dargestellten, aber hinter bzw. unter dem Sitz 2 befindlichen Fahrzeugboden verbunden und normalerweise bei Nichtbenutzung des Kindersitzes durch die Polsterteile 9, 10 von Rückenlehne 3 und Sitzteil 4 verdeckt.

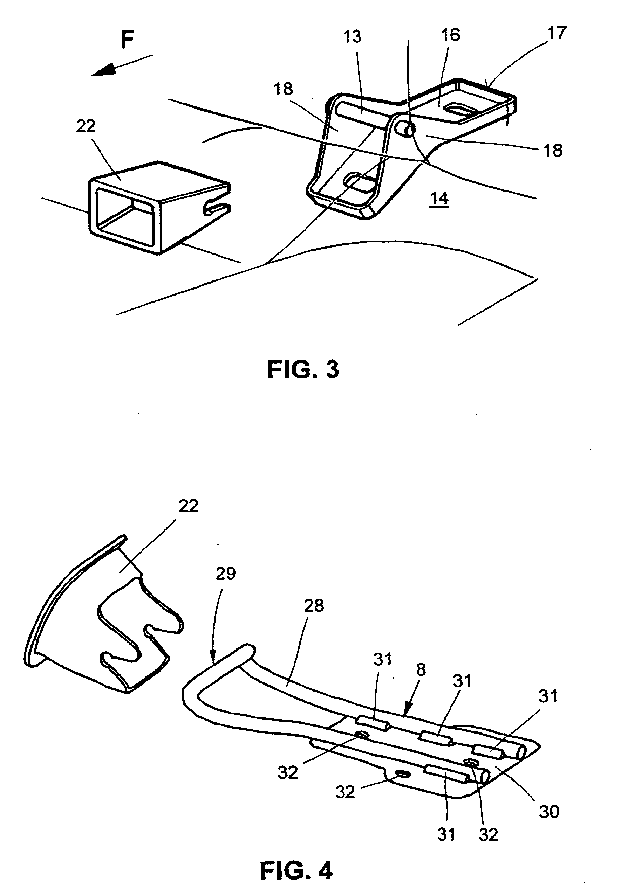

Zur Befestigung des Kindersitzes ist gemäß Fig. 2 an der jeweiligen Seite des Kindersitzes 11 ein Steckteil 12 vorgesehen, welches in den Spalt 7 gemäß Pfeil 33 einführbar und am entsprechenden Befestigungspunkt 8 mit einem quer zur Fahrtrichtung **F** ausgerichteten Bolzen 13 verbindbar ist. Der Bolzen 13 ist seinerseits an einem mit dem Fahrzeugboden 14 verbundenen Halter 15 gelagert, der gemäß Fig. 3 als Blechhalter mit einer Bodenplatte 16 sowie einem umlaufenden, etwa rechtwinklig zu der Bodenplatte 16 ausgerichteten Rand 17 ausgebildet ist. Die Lagerung des Bolzens 13 erfolgt dabei zwischen zwei beabstandet zueinander angeordneten Schenkeln 18, die an den gegenüberliegenden länglichen Seiten des Blechhalters angeordnet und mit dem Rand 17 verbunden sind.

Das Steckteil 12 ist auf eine nicht dargestellte, aber an sich bekannte Art mit dem Bolzen 13 verriegelbar ausgebildet. Dazu kann beispielsweise, wie in Fig. 2 dargestellt, am Steckteil 12 eine verriegelbare Rastausnehmung 19 für den Bolzen 13 vorgesehen sein, die mittels einer am Kindersitz 11 bzw. am Steckteil 12 angeordneten Handhabe 20 entriegelbar ist. Das Steckteil 12 kann auch auf eine unterschiedliche Art mit dem Kindersitz 11 verbunden sein. So kann das Steckteil 12 beispielsweise einteilig mit einem Unterbau des Kindersitzes 11 ausgebildet oder mit diesem durch eine Lasche 21 oder einen Gurt verbunden sein. Wichtig dabei ist, daß nach der Verriegelung des Steckteils 12 am Bolzen 13 der Kindersitz 11 unverschiebbar auf dem Sitz 2 positioniert und festgehalten ist.

Um den Zugang zum jeweiligen Befestigungspunkt 8 zu erleichtern, ist an jedem Befestigungspunkt 8 im Bereich des Spaltes 7 ein Führungsteil 22 vorgesehen, welches zum Bilden eines Zugangskanals 23 für das Steckteil 12 trichterförmig ausgebildet ist. Bei der Montage wird das Führungsteil 22 gegen die Kraft der elastischen Polsterteile 9, 10 von Rückenlehne 3 und Sitzteil 4 in den Spalt 7 eingesetzt und verrastbar mit dem Bolzen 13 verbunden. Dazu sind am Führungsteil 22 zwei beabstandet zueinander angeordnete Rastausnehmungen 24 vorgesehen, die im wesentlichen durch jeweils zwei gegenüberliegende elastische Schenkel 25, 26 gebildet sind. An jedem Schenkel 25, 26 sind dabei Rastnasen 27 angeordnet, die im eingerasteten Zustand den Bolzen 13 hintergreifen und dadurch eine sichere Haltung des Führungsteils 22 am Bolzen 13 ermöglichen.

In Fig. 4 ist der Befestigungspunkt 8 durch einen etwa U-förmigen Bügel 28 mit einem bolzenartigen Abschnitt 29 gebildet. Dieser Bügel 28 ist mit einer Bodenplatte 30 durch Schweißen (Schweißnähte 31) verbunden. Das Führungsteil 22 und das Steckteil 12 (in Fig. 4 nicht dargestellt) sind bei dieser Ausführung analog der Ausführung nach Fig. 3 mit dem bolzenartigen Abschnitt 29 lösbar verbindbar. Die Bodenplatte 30 kann dabei durch nicht dargestellte, aber Bohrungen 32 in der Bodenplatte 30 durchsetzende Schrauben mit dem Fahrzeugboden 14 (nicht dargestellt) verbunden werden.

## Patentansprüche

1. Vorrichtung zur Befestigung eines Kindersitzes oder dergleichen auf einem Sitz, insbesondere einem Kraftfahrzeugsitz, welcher eine Rückenlehne sowie ein Sitzteil aufweist, die im Bereich der aneinander zugekehrten Enden einen Spalt bilden, in dem zumindest ein Befestigungspunkt für den Kindersitz bzw. ein mit diesem verbundenes Steckteil angeordnet ist, **dadurch gekennzeichnet, daß** zur Erweiterung des Spaltes (7) bzw. zur Erleichterung des Zugangs zum Befestigungspunkt (8) im Bereich des Spaltes (7) ein abnehmbares Führungsteil (22) für den Kindersitz (11) bzw. das Steckteil (12) vorgesehen ist.

2. Vorrichtung nach Anspruch 1, **dadurch gekennzeichnet, daß** das Führungsteil (22) trichterförmig ausgebildet und derart angeordnet ist, daß zumindest in einem in Fahrtrichtung **F** ausgerichteten Querschnitt, insbesondere einem vertikalen Querschnitt, ein sich in Richtung zum Befestigungspunkt (8) verjüngender Zugangskanal (23) gebildet wird.

3. Vorrichtung nach Anspruch 1 oder 2, **dadurch gekennzeichnet, daß** das Führungsteil (22) im wesentlichen durch die elastisch nachgiebigen, zumindest einen Teil des Spaltes (7) bildenden Polsterteile (9, 10) von Rückenlehne (3) und Sitzteil (4) räumlich ausgerichtet und in dieser Lage gehalten ist.

4. Vorrichtung nach einem der Ansprüche 1 bis 3, **dadurch gekennzeichnet, daß** der Befestigungspunkt (8) durch einen mit der Sitzstruktur bzw. Fahrzeugboden (14) verbundenen Bügel (28) bzw. Bolzen (13) gebildet ist, welcher sowohl mit dem Steckteil (12) als auch mit dem Führungsteil (22) lösbar verbindbar ist.

5. Vorrichtung nach einem der Ansprüche 1 bis 4, **dadurch gekennzeichnet, daß** das Führungsteil (22) zumindest eine Rastausnehmung 24 mit zumindest einem elastischen Schenkel (25, 26) aufweist, an dem eine im befestigten Zustand den Bügel (28) bzw. Bolzen (13) hintergreifende Rastnase (27) angeordnet ist.

6. Vorrichtung nach einem der Ansprüche 1 bis 5, **dadurch gekennzeichnet, daß** das Steckteil (12) in den Zugangskanal (23) einführbar und am Bügel (28) bzw. Bolzen (13) verriegelbar ausgebildet ist.

7. Vorrichtung nach einem der Ansprüche 1 bis 6, **dadurch gekennzeichnet, daß** das Steckteil (12) verrastbar mit dem Bügel (28) bzw. Bolzen (13) ausgebildet ist, wobei das Führungsteil (22) bei der Montage des Kindersitzes (11) eine zielgerichtete Positionierung des Steckteils (12) gegenüber dem Bügel (28) bzw. Bolzen (13) ermöglicht.

8. Vorrichtung nach einem der Ansprüche 1 bis 7, **dadurch gekennzeichnet, daß** das Steckteil (12) starr mit dem Kindersitz (11) verbunden ist.

9. Vorrichtung nach einem der Ansprüche 1 bis 7, **dadurch gekennzeichnet, daß** das Steckteil (12) elastisch bzw. durch einen Gurt mit dem Kindersitz (11) verbunden ist.

10. Vorrichtung nach einem der Ansprüche 1 bis 3, **dadurch gekennzeichnet, daß** der Befestigungspunkt (8) und das Steckteil (12) entsprechend durch ein an sich bekanntes Gurtschloß sowie eine darin verriegelbare Steckzunge gebildet sind, wobei das Führungsteil (22) lösbar mit dem Gurtschloß verbindbar ist.

## Claims

1. A device for the attachment of a child seat or the like to a seat, in particular a motor vehicle seat, which comprises a backrest and a seating part which form a gap in the region of the ends facing each other, wherein there is arranged at least one attachment point for the child seat or a plug-in part connected thereto, **characterized in that**, for the purposes of widening the gap (7) or for facilitating access to the attachment point (8) in the region of the gap (7), there is provided a removable guide member (22) for the child seat (11) or the plug-in part (12).

2. A device in accordance with Claim 1, **characterized in that** the guide member (22) is in the form of a funnel and is arranged in such a manner that an access channel (23) tapering towards the attachment point (8) is formed in at least one cross section oriented in the direction of travel F, in particular, a vertical cross section.

3. A device in accordance with Claim 1 or 2, **characterized in that** the guide member (22) is spatially oriented and held in this position essentially by means of the resiliently pliable upholstered parts (9, 10) of the backrest (3) and the seating part (4) which form at least a part of the gap (7).

4. A device in accordance with any of the Claims 1 to 3, **characterized in that** the attachment point (8) is formed by a loop member (28) or bar (13) which is connected to the seat structure or the floor of the vehicle (14) and which is connectable in releasable manner to both the plug-in part (12) and the guide member (22).

5. A device in accordance with any of the Claims 1 to 4, **characterized in that** the guide member (22) comprises at least one latching recess 24 having at least one resilient arm (25, 26) on which there is arranged a latching lug (27) that engages behind the loop member (28) or the bar (13) in the attached state.

6. A device in accordance with any of the Claims 1 to 5, **characterized in that** the plug-in part (12) is adapted to be inserted into the access channel (23) and is lockable to the loop member (28) or the bar (13).

7. A device in accordance with any of the Claims 1 to 6, **characterized in that** the plug-in part (12) is adapted to be latched to the loop member (28) or the bar (13), wherein the guide member (22) enables accurate positioning of the plug-in part (12) with respect to the loop member (28) or the bar (13) during the process of mounting the child seat (11).

8. A device in accordance with any of the Claims 1 to 7, **characterized in that** the plug-in part (12) is rigidly connected to the child seat (11).

9. A device in accordance with any of the Claims 1 to 7, **characterized in that** the plug-in part (12) is connected resiliently or by means of a belt to the child seat (11)

10. A device in accordance with any of the Claims 1 to 3, **characterized in that** the attachment point (8) and the plug-in part (12) are constructed in like manner to a known seat belt fitting and plug-in tongue that is lockable therein, whereby the guide member (22) is connectable in releasable manner to the seat belt fitting.

## Revendications

1. Dispositif pour la fixation d'un siège d'enfant ou analogue sur un siège, en particulier, un siège de véhicule automobile, présentant un dossier avec une partie d'assise, formant, dans la zone des extrémités tournées l'une vers l'autre, un intervalle, dans lequel au moins un point de fixation pour le siège d'enfant, ou une partie d'enfichage reliée à celui-ci est disposé, **caractérisé en ce que**, pour élargir l'intervalle (7) ou pour faciliter l'accès au point de fixation (8), dans la zone de l'intervalle (7) est prévue une partie de guidage (22) amovible pour le siège d'enfant (11) ou la partie d'enfichage (12).

2. Dispositif selon la revendication 1, **caractérisé en ce que** la partie de guidage (22) est conformée en entonnoir et disposée de manière que, au moins en une section transversale orientée dans la direction de roulage F, en particulier une section transversale verticale, soit formée un canal d'accès (23) allant en s'effilant en évoluant en direction du point de fixation (8).

3. Dispositif selon la revendication 1 ou 2, **caractérisé en ce que** la partie de guidage (22) est orientée spatialement et est maintenue à cette position, par les parties de rembourrage (9, 10) déformables élastiquement, formant au moins une partie de l'intervalle (7), du dossier (3) et de la partie d'assise (4).

4. Dispositif selon l'une des revendications 1 à 3, **caractérisé en ce que** le point de fixation (8) est formé par un étrier (28) ou un boulon (13), relié à la structure d'assise ou au plancher de véhicule (14), étrier ou boulon susceptible d'être relié de façon désolidarisable, tant à la partie d'enfichage (12), qu'également à la partie de guidage (22).

5. Dispositif selon l'une des revendications 1 à 4, **caractérisé en ce que** la partie de guidage (22) présente au moins un évidement d'encliquetage (24) ayant au moins une branche (25, 26) élastique, sur laquelle est disposé un ergot d'encliquetage (27), saisissant par l'arrière, à l'état fixé, l'étrier (28) ou le boulon (13).

6. Dispositif selon l'une des revendications 1 à 5, **caractérisé en ce que** la partie d'enfichage (12) est susceptible être introduite dans le canal d'accès (23) et est réalisée de façon à pouvoir être verrouillée sur l'étrier (28) ou le boulon (13).

7. Dispositif selon l'une des revendications 1 à 6, **caractérisé en ce que** la partie d'enfichage (12) est réalisée de façon à pouvoir être encliquetée avec l'étrier (28) ou le boulon (13), la partie de guidage (22), lors du montage du siège d'enfant (11), permettant un positionnement, orienté à dessein, de la partie d'enfichage (12) par rapport à l'étrier (28) ou au boulon (13).

8. Dispositif selon l'une des revendications 1 à 7, **caractérisé en ce que** la partie d'enfichage (12) est reliée rigidement au siège d'enfant (11).

9. Dispositif selon l'une des revendications 1 à 7, **caractérisé en ce que** la partie d'enfichage (12) est reliée, élastiquement ou au moyen d'une ceinture, au siège d'enfant (11).

10. Dispositif selon l'une des revendications 1 à 3, **caractérisé en ce que** le point de fixation (8) et la partie d'enfichage (12) sont formés de manière correspondante, par un fermoir de ceinture, connue en soi, ainsi qu'une languette d'enfichage y étant verrouillable, la partie de guidage (22) étant susceptible d'être reliée de façon désolidarisable à un fermoir de ceinture.
